# EUROPEAN PATENT APPLICATION

(11) **EP 4 207 071 A1**
(43) Date of publication of application: **05.07.2023**
(21) Application number: 22214199.6
(22) Date of filing: 16.12.2022
(51) Int. Cl.: G06T 7/60

(54) **SYSTEMS AND METHODS FOR MEASURING PROXIMITY OF OBJECTS ACROSS SERIAL SECTIONS OF OVERLAYED STAINED SLIDE PATHOLOGY IMAGES**

(30) Priority: 29.12.2021 US 202163266146 P
(71) Applicant: Leica Biosystems Imaging, Inc., Vista, CA 92081-8568 (US)
(72) Inventor: ANDERSON, Lori, San Diego, California (US)
(74) Representative: Simmons & Simmons

(57) **Abstract**

Determining spatial analysis data (D1, D2, D3, D4, D5, D6, D7, D8) in images (1002, 1004, 1006, 1008) each depicting a proximate serial tissue section obtained from a tissue sample. The stained tissue sections include markers (object, markers, etc.) that correspond to material in the tissue sample. The images each include data (f1, f2, f3, f4, f5, f6, f7, f8 , f9, f10, f11) depicting the markers of the stained tissue sections corresponding to the image. The images are registered and "overlayed" to form a representation of the tissue sample such that intra-section and inter-section measurements between markers in the images correspond to measurements of corresponding material in the tissue sample. A process determines intra-section and/or inter-section measurements between locations of data depicting markers in the images, the measurements representing a distance in 3D space between objects in the tissue sample associated with the markers, and the measurements are stored for use in subsequent processing, for example, spatial analysis of the markers.

## Description

### PRIORITY

This application claims priority to U.S. Provisional Patent App. No. 63/266,146, entitled "Systems and Methods for Measuring Proximity of Objects Across Serial Sections of Overlayed Stained Slide Pathology Images," filed on December 29, 2021, the disclosure of which is incorporated by reference herein.

### BACKGROUND

Tissue samples may be analyzed microscopically for various diagnostic purposes, including detecting the presence of cancer by identifying structural abnormalities in the tissue samples. During such analysis, a tissue sample may be embedded and then sectioned into multiple separate sections. Each section may then be placed onto an individual side. The tissue section on each slide may be stained to improve contrast and/or highlight regions of interest. Each slide may then be imaged to form a digital whole slide image (WSI). Individual digital WSI's may analyzed to identify structural features in the tissue sample.

In some circumstances, it may be beneficial to measure distances between tissue features appearing across individual sides. For instance, the presence of specific protein markers in a given tissue sample that can assist with accurate tumor classification and diagnosis, prognosis, and prediction of treatment responses. The distance between specific protein markers may further assist with accurate tumor classification and diagnosis, prognosis, and prediction of treatment responses. However, generating such measurements may present some challenges. For instance, because digital WSI's are of a single section of the tissue sample, an individual WSI may only include two-dimensional spatial information. Thus, it may be desirable to measure spatial distances in a digital pathology environment with improved accuracy and reliability.

### BRIEF DESCRIPTION OF THE DRAWINGS

The features and advantages of the multi-stage stop devices, systems, and methods described herein will become more fully apparent from the following description and appended claims, taken in conjunction with the accompanying drawings. These drawings depict only several embodiments in accordance with the disclosure and are not to be considered limiting of its scope. In the drawings, similar reference numbers or symbols typically identify similar components, unless context dictates otherwise. The drawings may not be drawn to scale.
**Figure 1** illustrates an example environment in which a user and/or the multispectral imaging system may implement an image analysis system according to some embodiments.
**Figure 2** depicts an example workflow for generating image data from a tissue sample block according to some embodiments.
**Figure 3A** illustrates an example prepared tissue block according to some embodiments.
**Figure 3B** illustrates an example prepared tissue block and an example prepared tissue slice 300B according to some embodiments.
**Figure 4** shows an example imaging device, according to one embodiment.
**Figure 5** is an example computing system which can implement any one or more of the imaging device, image analysis system, and user computing device of the broad spectrum imaging system illustrated in **Figure 1****.**
**Figure 6** illustrates a representation of a tissue block that includes a tissue sample, the tissue block having a width, length, and a height dimension (X, Y, and Z dimensions).
**Figure 7** illustrates a side elevation view of the tissue block sample of Figure 6, and a plurality of tissue slices ("sections") that can be made from the tissue block sample.
**Figure** 8 illustrates a side elevation view of a first section of the tissue block shown in Figure 6 on a first slide and a second section of same tissue block on a second slide, the second section being a proximate serial section relative to the first section.
**Figure** 9 illustrates a side elevation view of a first section of the tissue block shown in Figure 6 on a first slide, a second section of the tissue block on a second slide, a third section of the tissue block on a third slide and an Nth section of the tissue block on an Nth slide, the first, second, third, and Nth sections being proximate serial sections.

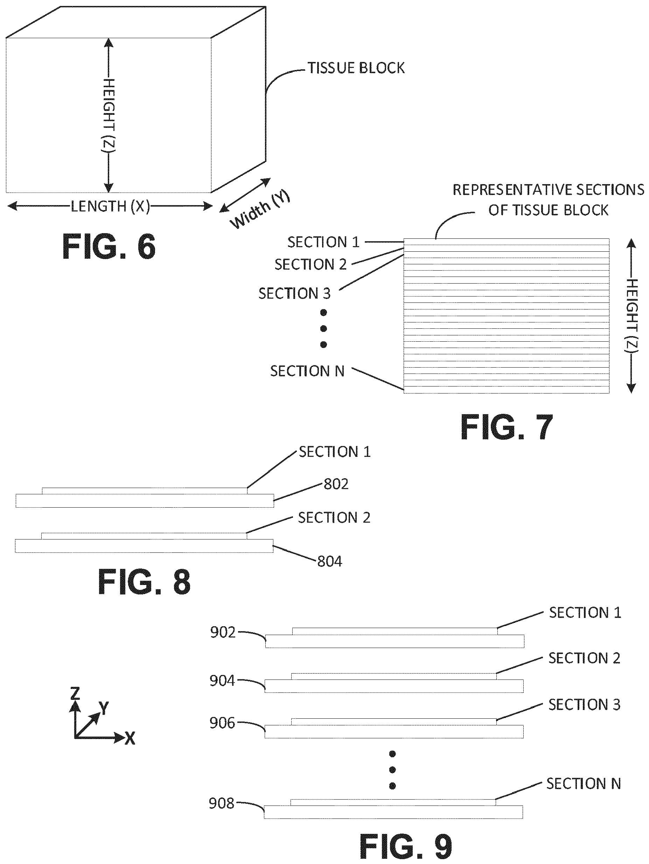

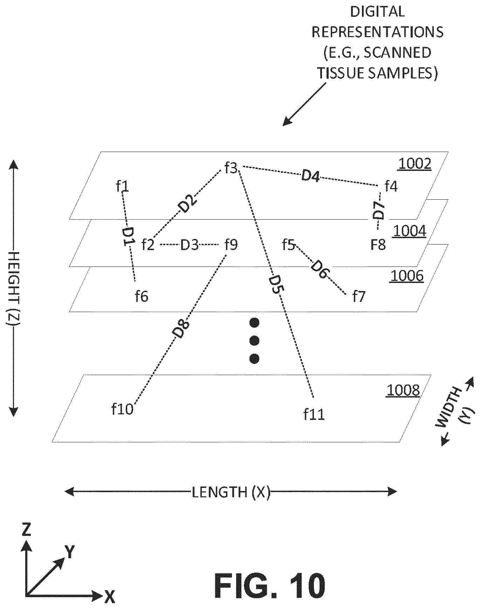

**Figure 10** illustrates a perspective side view of digital representations (e.g., "images" or "data" objects within the tissue sections) of the sections shown in Figure 9, that is, first section data, second section data, third section data, and Nth section data, arranged in the same order as the corresponding tissue sections were in the tissue sample, and Figure 10 also illustrates examples of intra-section proximity measurements that can be made between markers in the same section (e.g., within an XY vector within a certain section) or inter-section proximity measurements that can be made between markers in two different sections (e.g., along an XYZ vector between the two markers).
**Figure 11** illustrates an example of determining single section multiplex proximity measurements of markers (i.e., intra-section multiplex proximity measurements), which may be used for subsequent spatial analysis in various pathology workflows.
**Figure 12** is a schematic illustrating an example of an arrangement of digital representations (objects within and stained tissue section) of a first section, a second section, and a third section, showing side and top views of each section and illustrating a plurality of markers in each section data.
**Figure 13** illustrates an example of multilayer multiplex proximity measurements of markers in different sections (i.e., inter-section multiplex proximity measurements) which may be used for subsequent spatial analysis in various pathology workflows.
**Figure 14** is an example of a top view of the example of multilayer proximity measurements shown in Figure 13.
**Figure 15** is an example of a flowchart illustrating a process for associating markers to objects in the sections, generating digital representations of proximate serial sections, and determining spatial location information (3D) of markers in two or more sections.
**Figure 16** is a flowchart that illustrates an example of a method for determining 3D spatial location information (e.g., proximity measurements) of markers in two or more digitized sections. Such methods are not limited to the relationships of markers, the number of markers, of the number of sections illustrated herein, but instead in various embodiments can be any number of markers and any number of sections.

### DETAILED DESCRIPTION

Tissue samples are routinely analyzed microscopically for various diagnostic purposes, including detecting cancer by identifying morphological abnormalities in the tissue samples. For example, immunohistochemistry (IHC) is used in histology to detect the presence of specific protein markers that can assist with accurate tumor classification and diagnosis, prognosis, and prediction of treatment responses. IHC is a multistep process including an antigen-antibody reaction where the antigen is expressed in objects (e.g., cells, cellular proteins) within the tissue section and the external antibody reagent is added to and reacts with the tissue when the antigen is present. In some processes, serial proximate sections are sliced from a tissue sample, placed on slides, and processed using an IHC multistep process. As used herein, "serial proximate sections" refers to sections (slices) of tissue samples that are taken from the same tissue sample, including adjacent sections and non-adjacent sections of the tissue sample. Digital representations ("images") of the sections are made by imaging the sections with a digital imaging platform, for example, a whole slide scanner. Markers (antibody bound to antigen and labeled with a detectable (often optical) signaling reagent in each image can be analyzed, including using spatial analysis information representing distances and arrangements of the markers. The images representing each of the serial proximal sections are registered (aligned) to "vertically" adjacent images, three-dimensional spatial information of the markers in two or more images can be determined and used for additional spatial analysis of the markers.

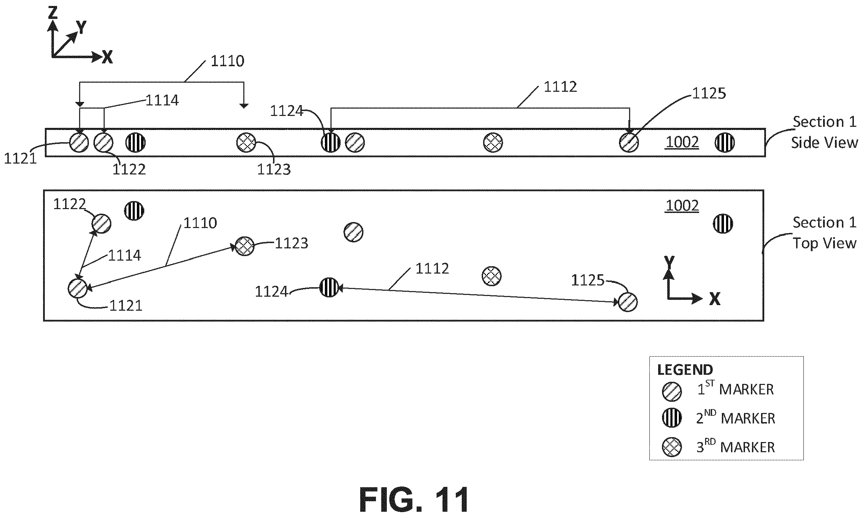

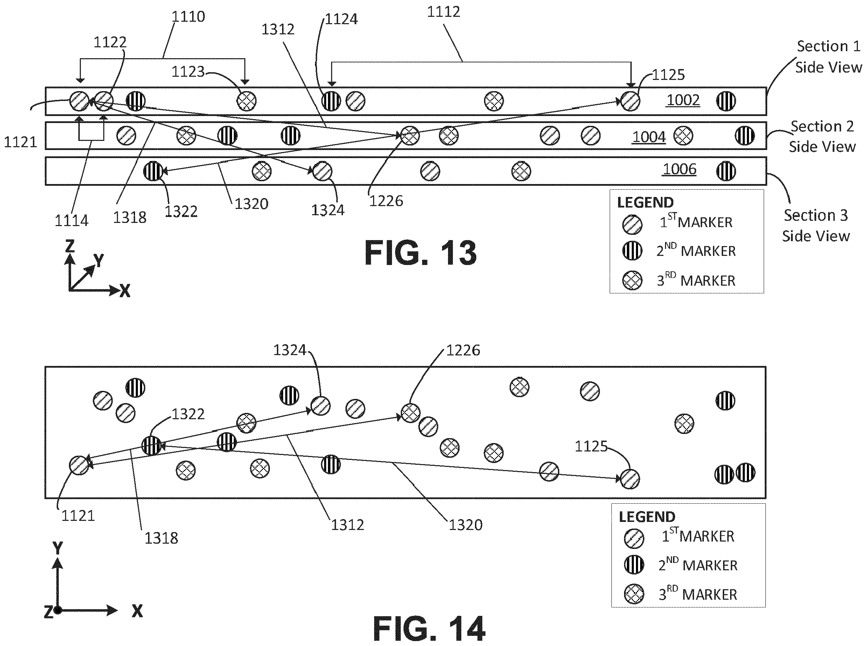

As an example, an apparatus can be configured for determining spatial analysis data in images of two or more proximate serial tissue sections obtained from a tissue sample. The apparatus can store a first image of a first stained tissue section of a tissue sample and a second image of a second stained tissue section of a tissue sample. The first stained tissue section includes one or more markers and the first image depicts the one or more markers of the first stained tissue section if present in the tissue. Similarly, the second stained tissue section has one or more markers and the second image depicts the one or more markers of the second stained tissue section. The second stained tissue section is sliced from the same tissue sample as the first stained tissue section and is a proximate serial section of the first stained tissue section. For example, the second stained tissue section can be an adjacent section of the tissue sample, or another non-adjacent slice of the tissue sample. In either case, its position relative to the first stained tissue section (and other tissue sections) is known. The images are registered. For example, the first image and the second image are aligned along a Z-axis such that X, Y locations of the data in the first image depicting objects in the tissue sample are aligned with X,Y locations of the data in the second image depicting corresponding objects in the tissue sample. Markers in the first image and the second image (and any other images) are selected and proximity measurements between the various selected markers are determined, the measurements representing a distance in three-dimensional (3D) space between a first object in the tissue sample associated with the first marker and a second object in the tissue sample associated with the second marker. In various examples, proximity measurements between markers in the same image can be determined (for example, see Figure 11), proximity measurements between markers in images corresponding to adjacent sections from the tissue sample can be determined (for example, see Figures 13 and 14), and/or proximity measurements between markers in images corresponding to non-adjacent sections of the tissue sample can be determined (for example, see Figures 13 and 14). The measurements are saved and then used for further analysis, for example, spatial analysis.

### System Overview

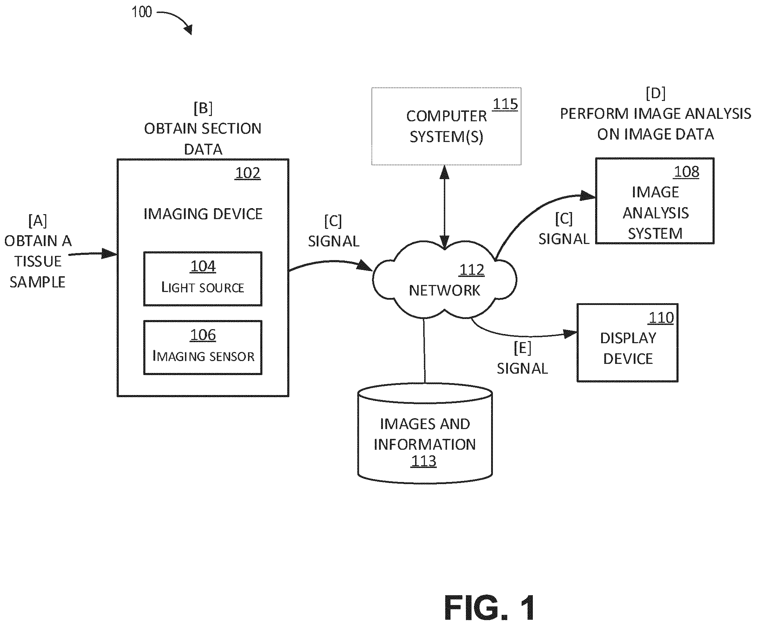

**Figure 1** illustrates an example environment 100 in which a user and/or an imaging system may analyze a tissue sample. The environment 100 includes an automated slide stainer 101 that is controlled to produce consistently stained slides based on one or more protocols. The environment 100 can also include an imaging device 102 that generates a digital representation of a stained slide. In some embodiments, the environment 100 includes a multi-color (or broad spectrum) imaging device 102. The digital representation may be referred to herein as an "image" and can be presented on a computer display device 110 for evaluation by a user. Although referred to as an image, the digital representation is a set of data which can be analyzed by computer processes, for example, for object (e.g., marker) identification, characterization, quantification, and/or spatial analysis of identified objects, etc. In some examples, an image can be used as training data for a machine learning process, and/or processed by a machine learning process to determine information from the image. The digital representation can be communicated as signal [C] to a network 112 and then communicated to an image analysis system 108 for processing (e.g., feature detection, feature measurements, etc.). The image analysis system 108 may perform image analysis on received image data. The image analysis system 108 can normalize the image data obtained using multi-color stained images for input to a machine learning algorithm, which may determine characteristics of the image. The image analysis system may register and/or transform an image to align an image with other related images to facilitate analysis of information in the related images. Results from the image analysis system 108 can be communicated as a signal [E] to one or more display devices 110 (which also may be referred to herein as a "display device" or a "client device").

In some implementations, the imaging device 102 includes a light source 104 configured to emit light onto or through the tissue sample. In an example, the light source can be a broad-spectrum white light source emitting light across a spectrum of wavelengths. In another example, the light source can emit light across a particular range of one or more wavelengths. In some embodiments, the light source 102 is configured to provide a "brightfield" emitting light through the sample. In some embodiments, the light source 102 is configured to provide light of wavelengths that causes fluorescence of material (e.g., markers, objects) in the tissue sample. The imaging device 102 includes one or more imaging sensor 106 configured to detect light emitted from, or transmitted through, the tissue sample, based on the implementation. Embodiments of imaging using the light source 104 can involve providing light to the tissue sample within a range of frequencies.

In certain embodiments, the stained tissue sample may reflect light, or through fluorescence, emit light received from the light source 104, which can then be detected at the image sensor 106. In these implementations, the light source 142 and the image sensor 106 may be located on substantially the same side of the tissue sample. In other implementations, the light source 104 and the image sensor 106 may be located on opposite sides of the tissue sample. The image sensor 106 may be further configured to generate image data based on the broad spectrum light detected at the image sensor 106. In certain implementations, the image sensor 106 may include a high-resolution sensor configured to generate a high-resolution image of the tissue sample. The high-resolution image may be generated based on excitation of the stained tissue sample in response to light provided onto the sample at different frequencies (e.g., a frequency spectrum) or different wavelengths. For example, fluorescence microscopy uses intense, near-monochromatic illumination. In some embodiments, light is provided by xenon arc lamps or mercury-vapor lamps with an excitation filter, one or more lasers, supercontinuum sources, and high-power LEDs.

The imaging device 102 may capture and/or generate image data for analysis. The imaging device 102 may include one or more of a lens, an image sensor, a processor, or memory. The imaging device 102 may receive a user interaction. The user interaction may be a request to capture image data. Based on the user interaction, the imaging device 102 may capture image data. In some embodiments, the imaging device 102 may capture image data periodically (e.g., every 10, 20, or 30 minutes). In other embodiments, the imaging device 102 may determine that an item has been placed in view of the imaging device 102 (e.g., a histological sample has been placed on a table and/or platform associated with the imaging device 102) and, based on this determination, capture image data corresponding to the item. The imaging device 102 may further receive image data from additional imaging devices. For example, the imaging device 102 may be a node that routes image data from other imaging devices to the image analysis system 108. In some embodiments, the imaging device 102 may be located within the image analysis system 108. For example, the imaging device 102 may be a component of the image analysis system 108. Further, the image analysis system 108 may perform an imaging function. In other embodiments, the imaging device 102 and the image analysis system 108 may be connected (e.g., wirelessly or wired connection). For example, the imaging device 102 and the image analysis system 108 may communicate over a network 112. Further, the imaging device 102 and the image analysis system 108 may communicate over a wired connection. In one embodiment, the image analysis system 108 may include a docking station that enables the imaging device 102 to dock with the image analysis system 108. An electrical contact of the image analysis system 108 may connect with an electrical contact of the imaging device 102. The image analysis system 108 may be configured to determine when the imaging device 102 has been connected with the image analysis system 108 based at least in part on the electrical contacts of the image analysis system 108. In some embodiments, the image analysis system 108 may use one or more other sensors (e.g., a proximity sensor) to determine that an imaging device 102 has been connected to the image analysis system 108. In some embodiments, the image analysis system 108 may be connected to (via a wired or a wireless connection) a plurality of imaging devices.

The image analysis system 108 may include various components for providing the features described herein. In some embodiments, the image analysis system 108 may include one or more image analysis modules to perform the image analysis of the image data received from the imaging device 102. The image analysis modules may perform one or more imaging algorithms using the image data.

The image analysis system 108 may be connected to one or more display device 110. The image analysis system 108 may be connected (via a wireless or wired connection) to the display device 110 to provide a recommendation for a set of image data. The image analysis system 108 may transmit the recommendation to the display device 110 via the network 112. In some embodiments, the image analysis system 108 and the user computing device 110 may be configured for connection such that the user computing device 110 can engage and disengage with image analysis system 108 in order to receive the recommendation. For example, the display device 110 may engage with the image analysis system 108 upon determining that the image analysis system 108 has generated a recommendation for the display device 110. Further, a particular display devices 110 may connect to the image analysis system 108 based on the image analysis system 108 performing image analysis on image data that corresponds to the particular user computing device 110. For example, a user may be associated with a plurality of histological samples. Upon determining, that a particular histological sample is associated with a particular user and a corresponding display device 110, the image analysis system 108 can transmit a recommendation for the histological sample to the particular display device 110. In some embodiments, the display device 110 may dock with the image analysis system 108 in order to receive the recommendation.

In some implementations, the imaging device 102, the image analysis system 108, and/or the display device 110 may be in wireless communication. For example, the imaging device 102, the image analysis system 108, and/or the display device 110 may communicate over a network 112. The network 112 may include any viable communication technology, such as wired and/or wireless modalities and/or technologies. The network may include any combination of Personal Area Networks ("PANs"), Local Area Networks ("LANs"), Campus Area Networks ("CANs"), Metropolitan Area Networks ("MANs"), extranets, intranets, the Internet, short-range wireless communication networks (e.g., ZigBee, Bluetooth, etc.), Wide Area Networks ("WANs") - both centralized and/or distributed -and/or any combination, permutation, and/or aggregation thereof. The network 112 may include, and/or may or may not have access to and/or from, the internet. The imaging device 102 and the image analysis system 108 may communicate image data. For example, the imaging device 102 may communicate image data associated with a histological sample to the image analysis system 108 via the network 112 for analysis. The image analysis system 108 and the display device 110 may communicate a recommendation corresponding to the image data. For example, the image analysis system 108 may communicate a diagnosis regarding whether the image data is indicative of a disease present in the tissue sample. In some embodiments, the imaging device 102 and the image analysis system 108 may communicate via a first network and the image analysis system 108 and the display device 110 may communicate via a second network. In other embodiments, the imaging device 102, the image analysis system 108, and the display device 110 may communicate over the same network.

One or more third-party computer systems 115 ("computer system 115") may communicate with the imaging device 102, the image analysis system 108, and/or the display device 110. In some embodiments, the computer system 115 may communicate directly with the imaging device 102, the image analysis system 108, and/or the display device 110 directly or via the network 112.

The computer system 115 can provide information to change functionality on the imaging device 102, the image analysis system 108, and/or the display device 110, or even the network 112. For example, the information may be new software, a software update, new or revised lookup tables, or data or any other type of information that is used in any way to generate, manipulate, transfer or render an image (all being referred to herein as an "update" for ease of reference). The update may be related to, for example, image compression, image transfer, image storage, image display, image rendering, etc. The computer system 115 may provide a message to the device or system to be updated, or may provide a message to a user who interacts with the system control updating the system. In some embodiments, the computer system 115 provides an update automatically, e.g., periodically or as needed/available. In some embodiments, the computer system 105 may provide an update in response to receiving an indication from a user provide the update (e.g., affirmation for the update or a request for the update).

With reference to an illustrative embodiment, at [A], the imaging device 102 can obtain a tissue sample (or "tissue block"). In an example, the tissue sample may biological tissue that has been removed from a person or an animal for analysis. The tissue sample may be a histological sample. The tissue sample may be sectioned (sliced) to generate one or more sections of the tissue sample. The imaging device 102 can image (e.g., scan, capture, record, etc.) the one or more sections of the tissue sample. As will be discussed in further below, in order to prepare portions (e.g., slices or "sections") of the tissue sample for analysis, various histological techniques may be performed. The imaging device 102 can capture an image of a stained section from the tissue sample and store corresponding block and serial tissue section data in the imaging device 102. The imaging device 102 may obtain the data based on a user interaction. For example, a user may provide an input through a user interface (e.g., a graphical user interface ("GUI")) and request that the imaging device 102 image the tissue sample. Further, the user can interact with imaging device 102 to cause the imaging device 102 to image sections from the tissue sample. For example, the user can toggle a switch of the imaging device 102, push a button of the imaging device 102, provide a voice command to the imaging device 102, or otherwise interact with the imaging device 102 to cause the imaging device 102 to image the sections from the tissue sample. In some embodiments, the imaging device 102 may image sections from the tissue sample based on detecting, by the imaging device 102, that a glass slide holding a stained tissue section has been placed in a viewport of the imaging device 102. For example, the imaging device 102 may determine that a glass slide holding a stained tissue section has been placed on a viewport of the imaging device 102 and, based on this determination, image the tissue section.

At [B], the imaging device 102 can obtain images of sections of the tissue sample data. Various histological techniques may be performed on the section. The imaging device 102 can capture an image of each section, and store the images for subsequent analysis. The imaging device 102 may obtain the section images based on a user interaction. For example, a user may provide an input through a user interface and request that the imaging device 102 image the section. Further, the user can interact with imaging device 102 to cause the imaging device 102 to image the section.

At [C], the imaging device 102 can transmit a signal to the image analysis system 108 representing the captured image data (e.g., the block data and the slice data). The imaging device 102 can send the captured image data as an electronic signal to the image analysis system 108 via the network 112. The signal may include and/or correspond to a pixel representation of the section data. It will be understood that the signal can include and/or correspond to more, less, or different image data. For example, the signal may correspond to multiple sections, and may represent a first section data and a second section data. Further, the signal may enable the image analysis system 108 to reconstruct the tissue sample using the section data.

At [D], the image analysis system 108 can perform image analysis on the block data and the slice data provided by the imaging device 102. In order to perform the image analysis, the image analysis system 108 may utilize one or more image analysis modules that can perform one or more image processing functions. Each image analysis model can include computer executable instructions which are run by one or more computer hardware processors to perform certain functionality. In an example, an image analysis module may include an imaging algorithm, a machine learning model, a convolutional neural network, or any other modules for performing the image processing functions. In another example, an image analysis module can include one or more spatial analysis algorithms to measure the proximity between markers within an image of a section, or across images of sections of the tissue sample. In some examples, based on performing the image processing functions, the image analysis module can determine a likelihood that the block data and the slice data correspond to the same tissue block. For example, an image processing functions may include an edge analysis of the block data and the slice data and based on the edge analysis, determine whether the block data and the slice data correspond to the same tissue block. The image analysis system 108 can obtain a confidence threshold from the display device 110, the imaging device 102, or any other device. In some embodiments, the image analysis system 108 can determine the confidence threshold based on a response by the display device 110 to a particular recommendation. Further, the confidence threshold may be specific to a user, a group of users, a type of tissue block, a location of the tissue block, or any other factor. The image analysis system 108 can compare the determined confidence threshold with the image analysis performed by the image analysis module. Based on this comparison, the image analysis system 108 can generate a recommendation indicating a recommended action for the display device 110 based on the likelihood that the block data and the slice data correspond to the same tissue block. In other embodiments, the image analysis system 108 may be configured to identify whether the image data is indicative of a disease present in the tissue sample, for example, based on the results of a machine learning algorithm.

At [E], the image analysis system 108 can transmit a signal to the display device 110. The image analysis system 108 can send the signal as an electrical signal to the display device 110 via the network 112. The signal may include and/or correspond to a representation of a diagnostic test result. Based on receiving the signal, the display device 110 can assist the pathologist in determining the diagnosis. In some embodiments, the image analysis system 108 may transmit a series of recommendations corresponding to a group of tissues blocks and/or a group of slices. The image analysis system 108 can include, in the recommendation, a recommended action of a user. For example, the recommendation may include a recommendation for the user to review the tissue block and the slice(s). Further, the recommendation may include a recommendation that the user does not need to review the tissue block and the slice(s).

### Imaging Prepared Blocks and Prepared Slices

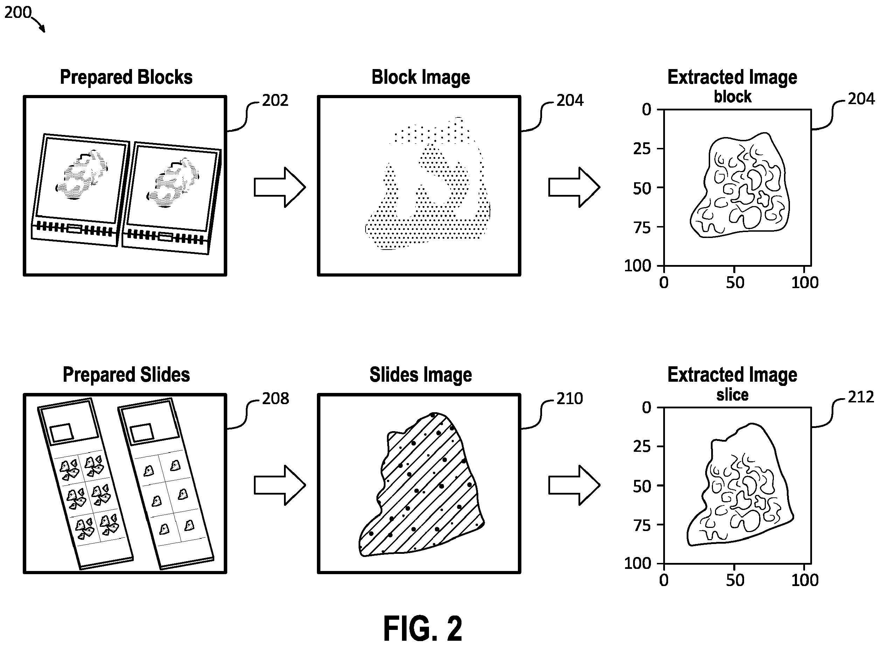

**Figure 2** depicts an example workflow 200 for generating image data from a tissue sample block according to some embodiments. The example workflow 200 illustrates a process for generating prepared blocks and prepared slices from a tissue block and generating pre-processed images based on the prepared blocks and the prepared slices. The example workflow 200 may be implemented by one or more computing devices. For example, the example workflow 200 may be implemented by a microtome, a stainer, a coverslipper, and an imaging device. Each computing device may perform a portion of the example workflow. For example, the microtome may cut the tissue block in order to generate one or more slices of the tissue block. The slices are transferred (e.g., manually) to the slides. The stainer may stain the slides. The coverslipper places a cover slip over each of the stained samples. After coverslipping, the imaging device can image each slide.

A tissue block can be obtained from a patient (e.g., a human, an animal, etc.). The tissue block may correspond to a section of tissue from the patient. The tissue block may be surgically removed from the patient for further analysis. For example, the tissue block may be removed in order to determine if the tissue block has certain characteristics (e.g., if the tissue block indicates the presence of cancer). In order to generate the prepared blocks 202, the tissue block may be prepared using a particular preparation process by a tissue processor. In the tissue processor the tissue will be dehydrated with multiple steps of alcohol and then infiltrated with molten paraffin wax to stabilize the tissue. For example, the tissue (sample) may be embedded in a paraffin wax block. The result will be a prepared block 202 Fig. 2. This block is ready for cutting with a microtome. The tissue block may also be embedded using an optimal cutting temperature ("OCT") compound. The preparation process may include one or more of a paraffin embedding, an OCT-embedding, or any other embedding of the tissue block. In the example of **Figure 2****,** the tissue block is embedded using paraffin embedding. Further, the tissue block is embedded within a paraffin wax block and mounted on a glass slide in order to formulate the prepared block.

The microtome can obtain a slice of the tissue block in order to generate the prepared slices 204. The microtome can use one or more blades to slice the tissue block and generate a slice (e.g., a section) of the tissue block. The microtome can further slice the tissue block to generate a slice with a preferred level of thickness. For example, the slice of the tissue block may be between 1 µm (0.001 millimeter) and 60 µm (0.06 millimeters). The microtome can provide the slice of the tissue block to a coverslipper. In generating the prepared slices 204, a stainer may also stain the slice of the tissue block using any staining protocol. Further, the stainer may stain the slice of the tissue block in order to highlight certain portions of the prepared slices 204 (e.g., an area of interest). In some embodiments, a computing device may include both the coverslipper and the stainer and the slide may be stained as part of the process of generating the slide. After staining, a coverslipper can encase the slice of the tissue block between a coverslip and the slide to generate the prepared slices 204. The prepared slices 204 may include the slice mounted in a certain position.

The prepared blocks 202 and the prepared slices 204 may be provided to an imaging device for imaging. In some embodiments, the prepared blocks 202 and the prepared slices 204 may be provided to the same imaging device. In other embodiments, the prepared blocks 202 and the prepared slices 204 are provided to different imaging devices. The imaging device can perform one or more imaging operations on the prepared blocks 202 and the prepared slices 204. In some embodiments, a computing device may include one or more of the tissue preparer, the microtome, the coverslipper, the stainer, and/or the imaging device.

The imaging device can capture an image of the prepared block 202 in order to generate the block image 206. The block image 206 may be a representation of the prepared block 202. For example, the block image 206 may be a representation of the prepared block 202 from one direction (e.g., from above). The representation of the prepared block 202 may correspond to the same direction as the prepared slices 204 and/or the slice of the tissue block. For example, if the tissue block is sliced in a cross-sectional manner in order to generate the slice of the tissue block, the block image 206 may correspond to the same cross-sectional view. In order to generate the block image 206, the prepared block 202 may be placed in a cradle of the imaging device and imaged by the imaging device. Further, the block image 206 may include certain characteristics. For example, the block image 206 may be a color image with a particular resolution level, clarity level, zoom level, or any other image characteristics.

The imaging device can capture an image of the prepared slices 204 in order to generate the slice image 208. The imaging device can capture an image of a particular slice of the prepared slices 204. For example, a slide may include any number of prepared slices and the imaging device may capture an image of a particular slice of the prepared slices. The slice image 208 may be a representation of the prepared slices 204. The slice image 208 may correspond to a view of the slice according to how the slice of the tissue block was generated. For example, if the slice of the tissue block was generated via a cross-sectional cut of the tissue block, the slice image 208 may correspond to the same cross-sectional view. In order to generate the slice image 208, the slide containing the prepared slices 204 may be placed in a cradle of the imaging device (e.g., in a viewer of a microscope) and imaged by the imaging device. Further, the slice image 208 may include certain characteristics. For example, the slice image 208 may be a color image with a particular resolution level, clarity level, zoom level, or any other image characteristics.

The imaging device can process the block image 206 in order to generate a pre-processed image 210 and the slice image 208 in order to generate the pre-processed image 212. The imaging device can perform one or more image operations on the block image 206 and the slice image 208 in order to generate the pre-processed image 210 and the pre-processed image 212. The one or more image operations may include isolating (e.g., focusing on) various features of the pre-processed image 210 and the post-processed image 212. For example, the one or more image operations may include isolating the edges of a slice or a tissue block, isolating areas of interest within a slice or a tissue block, or otherwise modifying (e.g., transforming) the block image 206 and/or the slice image 208. In some embodiments, the imaging device can perform the one or more image operations on one of the block image 206 or the slice image 208. For example, the imaging may perform the one or more image operations on the block image 206. In other embodiments, the imaging device can perform first image operations on the block image 206 and second image operations on the slice image 208. The imaging device may provide the pre-processed image 210 and the pre-processed image 212 to the image analysis system to determine a likelihood that the pre-processed image 210 and the pre-processed image 212 correspond to the same tissue block.

### Slicing a Tissue Block

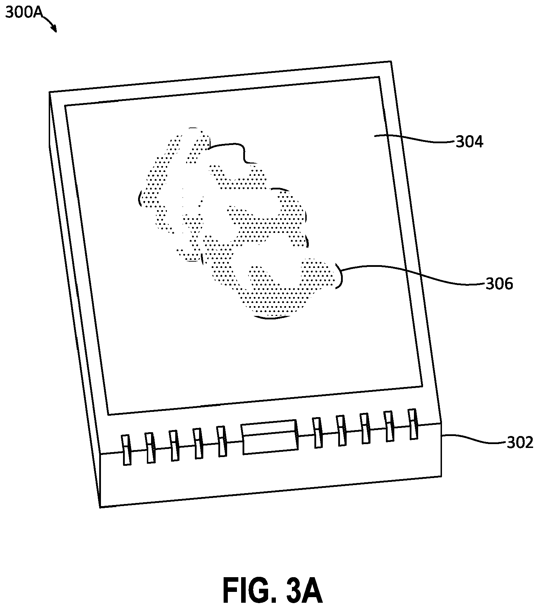

**Figure 3A** illustrates an example of a tissue block 300A according to some embodiments. The tissue block 300A may include a tissue block 306 that is preserved (e.g., chemically preserved, fixed, supported) in a particular manner. In order to generate the prepared tissue block 300A, the tissue block 306 can be placed in a fixing agent (e.g., a liquid fixing agent). For example, the tissue block 306 can be placed in a fixative such as formaldehyde solution. The fixing agent can penetrate the tissue block 306 and preserve the tissue block 306. The tissue block 306 can subsequently be isolated in order to enable further preservation of the tissue block 306. Further, the tissue block 306 can be immersed in one or more solutions (e.g., ethanol solutions) in order to replace water within the tissue block 306 with the one or more solutions. The tissue block 306 can be immersed in one or more intermediate solutions. Further, the tissue block 306 can be immersed in a final solution (e.g., a histological wax). For example, the histological wax may be a purified paraffin wax. After being immersed in a final solution, the tissue block 306 may be formed into a prepared tissue block 300A. For example, the tissue block 306 may be placed into a mold filled with the histological wax. By placing the tissue block in the mold, the tissue block 306 may be molded (e.g., encased) in the final solution 304. In order to generate the prepared tissue block 300A, the tissue block 306 in the final solution 304 may be placed on a platform 302. Therefore, the prepared tissue block 300A may be generated. It will be understood that the prepared tissue block 300A may be prepared according to any tissue preparation methods.

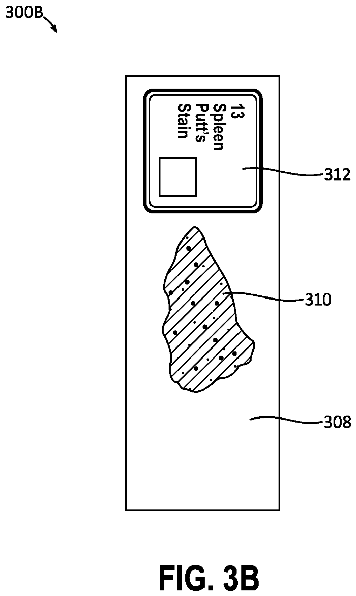

**Figure 3B** illustrates an example prepared tissue block 300A and an example prepared tissue slice 300B according to some embodiments. In order to generate the prepared tissue slice 300B, the prepared tissue block 300A may be sliced by a microtome. The microtome may include one or more blades to slice the prepared tissue block 300A. The microtome may take a cross-sectional slice 310 of the prepared tissue block 300A using the one or more blades. The cross-sectional slice 310 of the prepared tissue block 300A may include a slice 310 (e.g., a section) of the tissue block 306 encased in a slice of the final solution 304. In order to preserve the slice 310 of the tissue block 306, the slice 310 of the tissue block 306 may be modified (e.g., washed) to remove the final solution 304 from the slice 310 of the tissue block 306. For example, the final solution 304 may be rinsed and/or isolated from the slice 310 of the tissue block 306. Further, the slice 310 of the tissue block 306 may be stained by a stainer. In some embodiments, the slice 310 of the tissue block 306 may not be stained. The slice 310 of the tissue block 306 may subsequently be encased in a slide 308 by a coverslipper to generate the prepared tissue slice 300B. The prepared tissue slice 300B may include an identifier 312 identifying the tissue block 306 that corresponds to the prepared tissue slice 300B. The prepared tissue block 300A may also include an identifier that identifies the tissue block 306 that corresponds to the prepared tissue block 300A. As the prepared tissue block 300A and the prepared tissue slice 300B correspond to the same tissue block 306, the identifier of the prepared tissue block 300A and the identifier 312 of the prepared tissue slice 300B may identify the same tissue block 306.

### Imaging Devices

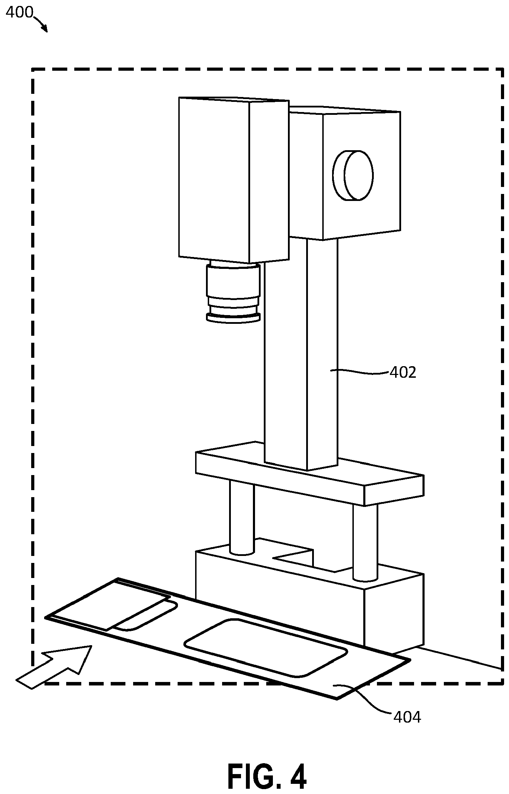

Figure 4 shows an example imaging device 400, according to one embodiment. The imaging device 400 can include an imaging apparatus 402 (e.g., a lens and an image sensor) and a platform 404. The imaging device 400 can receive a prepared tissue block and/or a prepared tissue slice via the platform 404. Further, the imaging device can use the imaging apparatus 402 to capture image data corresponding to the prepared block and/or the prepared slice. The imaging device 400 can be one or more of a camera, a scanner, a medical imaging device, a microscope, etc. Further, the imaging device 400 can use imaging technologies such as X-ray radiography, magnetic resonance imaging, ultrasound, endoscopy, elastography, tactile imaging, thermography, medical photography, nuclear medicine functional imaging, positron emission tomography, single-photon emission computed tomography, etc. For example, the imaging device can be a magnetic resonance imaging ("MRI") scanner, a positron emission tomography ("PET") scanner, an ultrasound imaging device, an x-ray imaging device, a computerized tomography ("CT") scanner.

The imaging device 400 may receive one or more of the prepared tissue block and/or the prepared tissue slice and capture corresponding image data. In some embodiments, the imaging device 400 may capture image data corresponding to a plurality of prepared tissue slices and/or a plurality of prepared tissue blocks. The imaging device 400 may further capture, through the lens of the imaging apparatus 402, using the image sensor of the imaging apparatus 402, a representation of a prepared tissue slice and/or a prepared tissue block as placed on the platform. Therefore, the imaging device 400 can capture image data in order for the image analysis system to compare the image data to determine if the image data corresponds to the same tissue block.

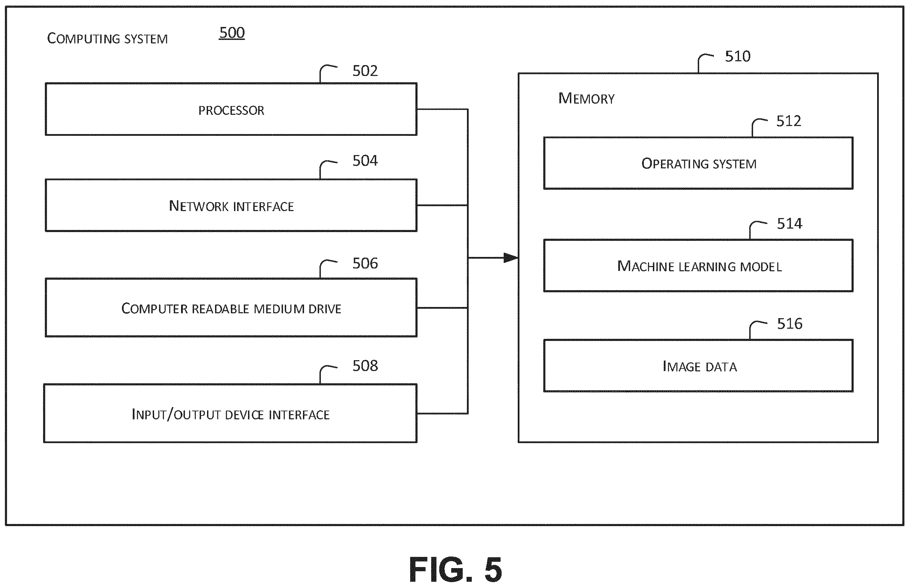

**Figure 5** is an example computing system 500 which, in various embodiments, can implement the functionality of one or more of the imaging device 102, image analysis system 108, and display device 110 of the multispectral imaging system illustrated in **Figure 1****.** In various embodiments, the computing system 500 can implement the functionality of the apparatus 605 and/or the display devices 620 illustrated in Figure 6. Referring to Figure 5, the computing system 500 may include one or more hardware processors 502, such as physical central processing units ("CPUs"), one or more network interfaces 504, such as a network interface cards ("NICs"), and one or more computer readable medium 506. The computer readable medium can be, for example, a high density disk ("HDDs"), solid state drives ("SDDs"), flash drives, and/or other persistent non-transitory computer-readable media. The computing system 500 may also include an input/output device interface 508, such as an input/output ("IO") interface in communication with one or more microphones, and one or more non-transitory computer readable memory (or "medium") 510, such as random access memory ("RAM") and/or other volatile non-transitory computer-readable media.

The network interface 504 can provide connectivity to one or more networks or computing systems. The hardware processor 502 can receive information and instructions from other computing systems or services via the network interface 504. The network interface 504 can also store data directly to the computer-readable memory 510. The hardware processor 502 can communicate to and from the computer-readable memory 510, execute instructions and process data in the computer readable memory 510, etc.

The computer readable memory 510 may include computer program instructions that the hardware processor 502 executes in order to implement one or more embodiments. The computer readable memory 510 can store an operating system 512 that provides computer program instructions for use by the computer processor 502 in the general administration and operation of the computing system 500. The computer readable memory 510 can further include program instructions and other information for implementing aspects of the present disclosure. In one example, the computer readable medium includes instructions for determining quality of an image displayed on a display device. For example, the computer readable medium includes program instructions for causing a hardware processor to perform a method of determining that a configuration change has occurred at the display device, providing a test image to the display device, receiving test image display data from the display device, the test image pixel data generated by a processor of the display device by processing the test image, determining if the test image display data is different than a reference test image by more than a quality threshold, and in response to determining that the test image display data is different than the reference test image by more than a quality threshold, generating an indicator that the configuration change affects functionality of the display device. As another example, the computer-readable medium 510 may include image data 516. In another example, the computer readable medium 510 includes instructions to execute one or more of the processes 700 (Figure 7A), 750 (Figure 7B), and/or 770 (Figure 7C). In some embodiments, multiple computing systems 500 may communicate with each other via respective network interfaces 504, and can implement multiple sessions each session with a corresponding connection parameter (e.g., each computing system 500 may execute one or more separate instances of processes described herein.

**Figure 6** illustrates a representation of a tissue block that includes a tissue sample, the tissue block having a width (Y), length (X), and a height (Z) dimension. The tissue sample is fixed and embedded (e.g., in paraffin) to preserve the tissue sample. In some embodiments a formalin-fixed paraffin-embedded (FFPE) method is used to preserve the tissue sample. FFPE tissues are often used in immunohistochemistry (IHC). FFPE is a method that is used to preserve tissue samples that are extensively used in medical applications, pathology, and various research. FFPE helps to preserve the cellular details, tissue structure, and morphology of the tissue samples. Over the years, it has since become the standard preservation procedure due to its cost-effectiveness for long-term storage at ambient temperatures compared to frozen tissue that has to be stored at ultra-low temperatures. As an example of one FFPE methodology, an FFPE process begins when a tissue specimen is selected and excised from the patient or donor. Once excised, tissue is immersed for an estimated eighteen to twenty-four hours in 10% neutral buffered formalin, which may be referred to as "formalin fixing" and is vital to help preserve the vital structures and protein available in the tissue. Once ready, the tissue is dehydrated using increasing concentrates of ethanol and embedded into paraffin wax blocks to become FFPE blocks.

**Figure 7** illustrates a side elevation view of the tissue block of Figure 6, and a plurality of tissue slices ("sections") that can be made from the tissue block. In this example, the tissue block is shown as having a plurality of representative sections (section 1, section 2, section 3, ...section N). The tissue block can be cut into serial sections of a certain thickness, which can be referred to as the section depth or section height (Z). As an example, a section can have a height of 5 µm, plus or minus 1 µm. In other examples, a section can have a height of 1 µm, 2 µm, 3 µm, 4 µm, 5 µm, 6 µm, 7 µm, 8 µm, 9 µm or 10 µm, plus or minus 0.5 µm, or greater than 10 µm.

The tissue sections are mounted on a slide, for example, a glass slide. As an example, **Figure 8** illustrates a side elevation view of a first section of the tissue block shown in Figure 6 on a first slide and a second section of same tissue block on a second slide, the second section being a proximate serial section relative to the first section. As another example, **Figure 9** illustrates a side elevation view of a first section of the tissue block shown in Figure 6 on a first slide, a second section of the tissue block on a second slide, a third section of the tissue block on a third slide and an Nth section of the tissue block on an Nth slide, the first, second, third, and Nth sections being proximate serial sections. The slides can be processed for analysis as described in Figures 1-5. In an example, each tissue section is bathed in a solution containing antibodies that react with specific protein markers, and stained to help visualization of the antibodies. Then the stained section on the microscope slide can be examined by a certified pathologist to evaluate the staining pattern of the specimen. Also, a digital representation of the stained section can be generated using various scanning and imaging equipment. The digital representation (or "image") may be displayed as an image, and/or processed by a computer system to determine information (e.g., spatial analysis information) associated with the section. Although the digital representation may be referred to as an "image" and can be displayed singularly or with other images (e.g., registered and overlayed with other associated images such that the multiple images represent proximate serial sections of a tissue block as illustrated in Figure 10), the digital representation is also information that also can be analyzed using computer analysis processes.

In some embodiments, tissue sections are mounted on glass slides and prepared for staining with hematoxylin & eosin (H&E) histological stains, and/or special stains, and/or immunohistochemistry, and/or nucleic acid (RNA or DNA) probes. For H&E stains, the hematoxylin stains cell nuclei a purplish blue, and eosin stains the extracellular matrix and cytoplasm pink, with other structures taking on different shades, hues, and combinations of these colors. Such stains allow pathologist to easily differentiate between the nuclear and cytoplasmic parts of a cell, and additionally, the overall patterns of coloration from the stain show the general layout and distribution of cells and provides a general overview of a tissue sample `s structure. Pattern recognition, by both human experts and by software that processes digitized representations (e.g., images) of the tissue samples (e.g., in digital pathology) provides histological information. Artificial intelligence or machine learning can also be used to identify objects, patterns, and information in the images.

For routine diagnosis, the use of hematoxylin and eosin is by preferred for viewing cellular and tissue structure detail by pathologists. The variation of stain intensity is often driven by the pathologist `s learning experience and personal preference. Because this stain demonstrates such a broad range of cytoplasmic, nuclear, and extracellular matrix features, nearly all teaching texts use H&E images. Many pathological processes continue to use this simple and essential stain today, which has remained unchanged for well over a century.

"Special stains" are processes that generally employ a dye or chemical that has an affinity for the particular tissue component that is to be demonstrated. They allow the presence/or absence of certain cell types, structures and/or microorganisms to be viewed microscopically. "Special stains" are not the same as, and existed long before, immunohistochemical (IHC) and/or molecular techniques (probes).

Immunohistochemistry (IHC) is used in histology to detect the presence of specific protein markers that can assist with accurate tumor classification and diagnosis. Not limited to just cancer, IHC is used in processes related to numerous other conditions. IHC is a multistep process including an antigen-antibody reaction where the antigen is expressed in objects within the tissue section and the external antibody reagent is added to and reacts with the tissue when the antigen is present. Then, detection reagents are added that recognize the presence of the antibody. Detection reagents may be chromogenic (pigmented) for brightfield microscopy / digital imaging or fluorophores for fluorescent (or darkfield) microscopy / digital imaging. IHC stains may be single-plex (one antibody specificity targeted to label a specific antigen and/or protein) with a single detection chromogen or fluorophore, or multiplex where multiple different antibody specificities with different detection chromogens or fluorophores label different antigens and/or proteins in objects within the tissue section.

Nucleic acid (RNA and/or DNA) probes are oligonucleotide probes that specifically bind to targeted RNA or DNA sequences with detection reagents for brightfield or fluorescent microscopy / digital imaging.

Referring again to Figure 9, stained serial sections 1, 2, 3, ...N from the tissue block are identified by proximate serial slice, mounted on slides, stained, and imaged to form a digital representation of the section via some digital imaging platform, for example, a whole slide scanner. As an example and in reference to Figures 9 and 10, section 1 is imaged to generate first section image 1002, section 2 is imaged to generate second section image 1004, section 3 is imaged to form third section image 1006, and section N is imaged to form Nth section image 1008. Images generated from each section are overlayed, arranged in the serial proximate (or other known) order as taken from the tissue block, and the images can be registered with the adjacent serial proximate image to align the information in each image. In some embodiments, the images are registered using architectural and/or object features to align digital information from each section. Various methods can be used to register. In an example, image registration algorithms can be intensity-based. In another example, image registration algorithms can be feature-based. Image registration involves spatially transforming one image of a section to align with one or more other images of proximate serial sections. Processing registered images allows information to be determined or collected from two or more aligned images, for example, spatial measurements and information of objects or markers. In some examples of image registration, one of the images is designated as a reference image and is "stationary" while the other images are transformed to match the reference image. Intensity-based methods compare intensity patterns in images via correlation metrics, while feature-based methods find correspondence between image features such as points, lines, and contours. Intensity-based methods can register entire images, or portions of the images (or sub-images). If sub-images are registered, centers of corresponding sub-images can be treated as corresponding feature points. Feature-based methods establish a correspondence between a number of especially distinct points in the images. Knowing the correspondence between a number of points in images, a geometrical transformation is then determined to map the target image to the reference images, thereby establishing point-by-point correspondence between the reference and target images. In some embodiments of image registration, the registration method combines intensity-based and feature-based information to register the images.

To account for major artifacts (e.g., tissue defects) that may be in one or more of the sections, image registration algorithms may use transformation models to relate and register images of proximate serial sections. In some embodiments, the transformation model may be a linear transformation, which can include rotation, scaling, translation, and other affine transforms. Linear transformation are global in nature, thus, they cannot model local geometric differences between images. In some embodiments, the transformation model can perform non-linear `elastic ` or 'nonrigid ` transformations. These transformations are capable of locally warping the target image to align with the reference image. Non-rigid transformations can include radial basis functions (thin-plate or surface splines, multi-quadrics, and compactly-supported transformations), physical continuum models (viscous fluids), and large deformation models (diffeomorphisms). Transformations are commonly described by a parametrization, where the model dictates the number of parameters. For instance, the translation of a full image can be described by a single parameter, a translation vector. These models are called parametric models. Non-parametric models on the other hand, do not follow any parameterization, allowing each image element to be displaced arbitrarily. There are a number of programs that implement both estimation and application of a warp-field. Some transformations methodologies can be found in, for example, "Regional registration of whole slide image stacks containing major histological artifacts" by Masha Paknezhad et al., BMC Bioinformatics, December 4, 2020; 21(1):558, which is incorporated by reference herein.

**Figure 10** illustrates a representative perspective side view of overlayed registered images of the sections shown in Figure 9, and illustrates examples of intra-section proximity measurements that can be made between markers in the same section (e.g., along an XY vector within a certain section), or inter-section proximity measurements that can be made between markers in two different sections (e.g., along an XYZ vector between the two markers). For example, first section image 1002, second section image 1004, third section image 1006, and the Nth section image 1008, arranged in the same order as the corresponding tissue sections were in the tissue sample. Each of the section images 1002, 1004, 1006, 1008 are associated with a length (X), a width (Y), and a thickness or height (Z). In some processes, the section images can be displayed on a computer display for a pathologist to analyze the information in the section images, including three-dimensional (3D) information relating to two or more section images. Such information may be determined by, for example, visual examination of the section images, or by human or computer intra-section image measurements or other spatial analysis made between markers or objects within a single section image, and/or inter-section image measurements or spatial analysis made between markers or objects (referred to collectively as "markers" for ease of reference) within two or more section images.

As illustrated in Figure 10, first section image 1002 includes markers f1, f3, and f4. Second section image 1004 include markers f2, f5, f8, and f9. Third section image 1006 includes markers f6 and f7. Nth section image 1008 includes markers f10 and f11. As an example, for some spatial analysis of the markers in the section images, distances between certain markers are determined. For example, inter-section distance D1 between marker f1 in first section image 1002 and marker f6 in third section image 1006; inter-section distance D2 between marker f2 in second section image 1004 and f3 in first section image f3; intra-section distance D3 between markers f2 and f9 in second section image 1004; intra-section distance D4 between markers f3 and f4 in first section image 1002; inter-section distance D5 between marker f3 in first section image 1002 and marker f11 in Nth section image 1008; inter-section distance D6 between marker f5 in second section image 1004 and marker f7 in third section image 1006; inter-section distance D7 between marker f4 in first section image 1002 and marker f8 in second section image 1004; and inter-section distance D8 between marker f9 in second section image 1004 and marker f10 in Nth section image 1006. In some embodiments where the section images are presented on a display, a user can interactively measure the distances between markers by, for example, selecting two markers using a pointing input device and then the computer system displaying the section images determines the distance between the markers and saves the data, e.g., on a computer storage medium. In some embodiments, a computer vision process can be used to determine the location of markers in each of the section images, and then spatial analysis processes can determine measurements between certain markers based on a predetermined protocol or program, or based on a user input, and the measurements can be saved on a computer storage medium.

Figures 11 - 14 illustrate representative side views and top plan views of section images to show examples of intra-section and inter-section measurements between markers in registered proximate serial sections. A Legend is included in each figure to illustrate an example of three different markers that may be in the section images (could include any number of different markers) : a first type of marker ("1st marker") indicated by a diagonal line pattern, a second type of marker ("2nd marker") indicated by a vertical striped line pattern, and a third type of marker ("3rd marker) indicated by a cross-hatch pattern. In various pathology processes, the tissue samples may be processed such that fewer or more markers may be discernable in the section images.

**Figure 11** illustrates an example of determining single layer multiplex proximity measurements of markers (i.e., intra-section multiplex proximity measurements), for subsequent spatial analysis in various pathology workflows. The first section image 1002 is illustrated in a representative side view and top view. In this example, to collect spatial analysis information, proximity measurements between markers are made within the section image. For example, measurements are obtained of distance 1114 between 1st markers 1121 and 1122, distance 1110 between 1st marker 1121 and 3rd marker 1123, and distance 1112 between 2nd marker 1124 and 1st marker 1125. Although each tissue section has a height, the section image is a representation of the information in the tissue section in a two-dimensional (2D) dataset having a length (X) dimension and a width (Y) dimension. Each of the distances is measured within the 2D section image, and accordingly each of these distances can be considered to be a vector having an X-component and a Y-component to capture spatial information relative to the two markers. In the examples of Figures 11-14, for clarity of the description there are only three different markers illustrated (e.g., a 1st marker 1121, a 2nd marker 1124, and a 3rd marker 1123). However, in various embodiments, there can be more than three markers (e.g., dozens of markers, hundreds of markers, thousands of markers, or tens of thousands of markers or more).

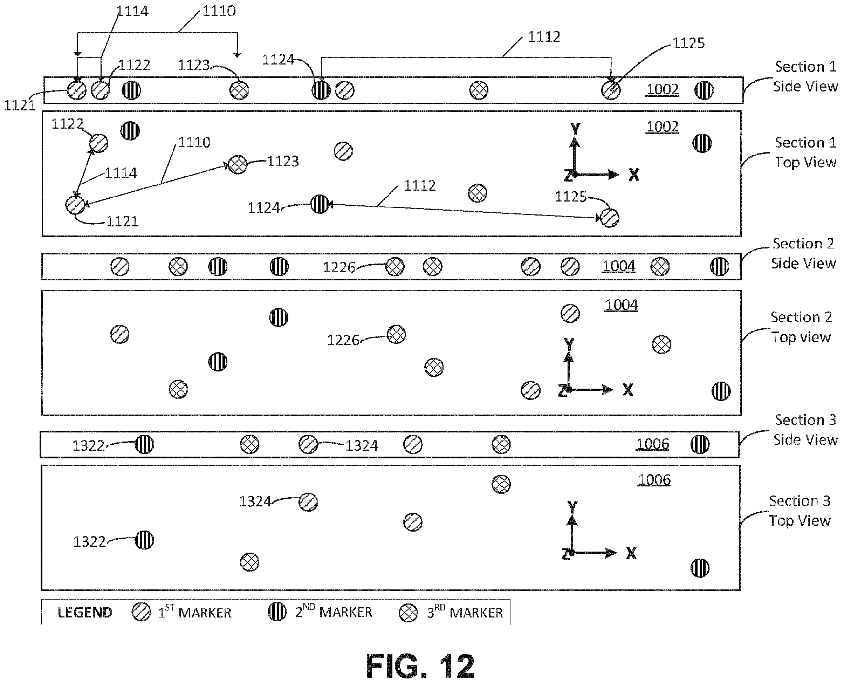

**Figure 12** is a schematic illustrating an example of an arrangement of digital representations of a first section (Section 1), a second section (Section 2), and a third section (Section 3), showing a side view and a corresponding top view of each section, and illustrating a plurality of markers in each section. In this example, for clarity Figure 12 illustrates three markers. However, in other examples there can be a much larger number (n) of markers (e.g., nearly an unlimited number of markers). Specifically, Figure 12 shows a side view and a corresponding top view of first section image 1002, a side view and a corresponding top view of second section image 1004, and a side view and a corresponding top view of third section image 1006. The markers and measurements illustrated in the side view and top view of first section image 1002 are the same as shown in Figure 11. Second section image 1004 includes 3rd marker 1226, and some additional markers. Third section image 1006 includes second marker 1332 and 1st marker 1324 and some additional markers. The first section image 1002, second section image 1004, and the third section image 1006 have been processed to be registered which allows spatial information of the markers from one section image to another to be accurately determined

**Figure 13** shows side views of three section images to illustrate an example of multilayer multiplex proximity measurements of markers in X, Y, Z (i.e., inter-section multiplex proximity measurements) which may be used for subsequent spatial analysis in various pathology workflows. In this example, for clarity Figure 13 illustrates three markers. However, in other examples there can be a much larger number (n) of markers (e.g., nearly an unlimited number of markers). In Figure 13, the section images are overlayed, arranged with the first section image 1002 on top, the third section image 1006 on the bottom, and the second section image 1004 between the first section image 1002 and the third section image 1006.

As shown in Figure 13, some of the proximity measurements between markers are intra-section measurements. For example, measurements are made of distance 1114 between 1st markers 1121 and 1122, distance 1110 between 1st marker 1121 and 3rd marker 1123, and distance 1112 between 2nd marker 1124 and 1st marker 1125. Each of the distances is measured within the 2D section image, and accordingly each of these distances can be considered to be a vector having an X-component and a Y-component to capture spatial information relative to the two markers.

Also as shown in Figure 13, some of the proximity measurements between markers are inter-section measurements. For example, a measurements is made of distance 1318 between 1st marker 1121 in the first section image 1002 and 1st marker 1324 in the third section image 1006. Also, measurements are made of distance 1320 between 2nd marker 1322 in the third section image 1006 and 15t marker 1125 in the first section image 1002; and distance 1312 between 1st marker 1121 in the first section image 1002 and 3rd marker 1226 in the second section image 1004. Each of the distances is measured within a 3D space section image, and accordingly each of these distances can be considered to be a vector having an X-component, a Y-component, and a Z-component to capture spatial information relative to the two markers. Showing these measurements in a different perspective, **Figure 14** illustrates a representation of a corresponding top view of the example of the same multilayer proximity distance measurements 1318, 1320, and 1312 shown in Figure 13, the top view looking down "through" aligned first section image 1002, the second section image 1004, and the third section image 1006 to see the 3D spatial relationship between the markers from in a X, Y top view. In the perspective of Figure 14, the Z-axis extends out of the page perpendicular to the X-axis (which extends horizontally in reference to the alignment of Figure 14) and the Y-axis (which extends vertically in reference to the alignment of Figure 14). in rand the Y axis.

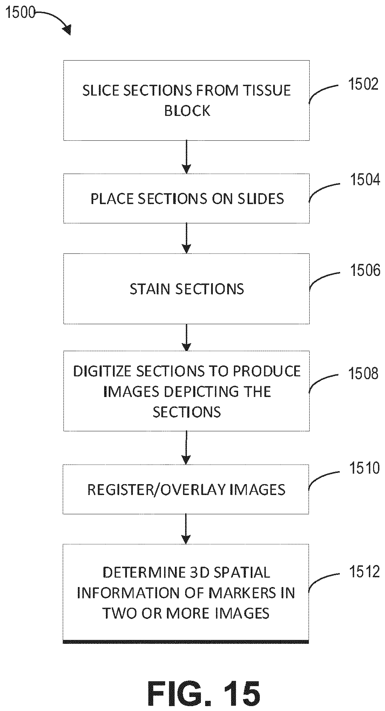

**Figure 15** is an example of a flowchart illustrating a process 1500 for analyzing a tissue block, and in particular, determining 3D spatial information (e.g., measurements) of n number of markers in two or more images of stained tissue sections. A tissue sample is provided for analysis, the tissue sample having a length (X), width (Y), and a height (Z) dimension (Figure 6). For example, a prepared tissue block 202 (Figure 2). At block 1504 or the process 1500, proximate serial sections are slices from the tissue sample and the sections are mounted to slides (for example, as described in reference to Figure 2). At block 1506, the slides are processed (e.g., stained) producing sections having markers associated with objects in the tissue sections. In some embodiments, processing the sections includes using Hematoxylin and Eosin (H&E).

At block 1508, each of the sections is digitized to produce an image of each tissue section. Each image includes data depicting features in the stained sections, including markers that are in the stained sections. Accordingly, at this point in process 1500, a plurality of images have been generated and stored, each image depicting a stained tissue section. The plurality of images, as an image set, form a representation of the tissue sample. For example, if the plurality of images are overlayed in an arrangement consistent with the tissue sample information they depict, they form a digital representation of the tissue sample. At block 1510, the plurality of images are processes to be registered to each other and overlayed such that locations in the plurality of images are consistent with each other and consistent with the locations of the tissue sample which they represent. The data in each image has an X, Y location in reference to the other images and the tissue sample. As the images do not have a depth per se, while the tissue sections they were generated from have a depth, the thickness of each section (e.g., 5 µm) is also taken into account when registering and overlaying the images to determine accurate location information from the images. In some instances, the registration may include transforming a part or all of an image to best register it to its adjacent (in Z) images.

At block 1512 the process 1500 determines 3D spatial information of markers (or objects or features) in the images. The spatial information can include measurements between certain markers in the same image, and/or measurements between certain markers in different images. In some examples, one measurement is made between certain markers. In some examples, dozens, hundreds, or thousands of measurements can be made between markers within the same image or in different images. In some examples, once the images are registered and overlayed so that a consistent reference location in 3D space of any data in the images is known, the markers can be identified in each image and locations of the markers determined. Then, depending on the spatial analysis desired, a plurality of markers in one or more images can be selected for spatial analysis, and any spatial location information of the markers relative to any other marker can be determined. Graphical representations of the registered and overlayed images can be generated and presented on a display to help provide context to a user. However, as the markers are identified and the location of the markers are known, spatial analysis can be performed without needing a user to visually indicate certain measurements using the display, although in some cases it may be useful to do so.

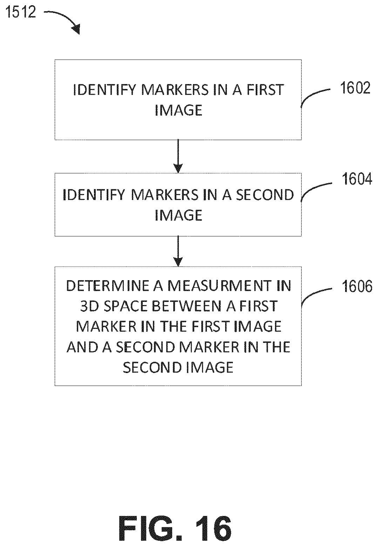

**Figure 16** is a flowchart that illustrates an example of a method for performing block 1512 of Figure 15 for determining 3D spatial location information of markers in two or more digitized sections. At block 1602, one or more markers can be identified in a first image. The markers can be identified by a user providing an input to a computer system using an input device (e.g., a mouse) or the markers can be identified by a particular process that identifies markers of interest. At block 1604, one or more markers can be identified in a second image, and subsequent images. Again, the markers can be identified by a user providing an input to a computer system using an input device (e.g., a mouse) or the markers can be identified by a particular process that identifies markers of interest. At block 1606, the process 1512 uses the 3D location information of the data in the registered images to determine a measurement in 3D space between at least one marker in any image and another marker in any other image, and saves the measurement for subsequent spatial analysis processing. In various examples, the process 1512 determines measurements between any marker on any image (or layer) and any marker on any other image (or layer). In some instances, measurements between dozens, hundreds, or even thousands of markers (or more) can be made and stored. Note: because it is not known if any specific marker will be detected in any piece of tissue (could stain negative) therefore, markers that may be desired to measure the distances between could be in any layer - it is possible (and likely) that each of the layers may be labeled with a different set of antibody markers.

### Exemplary Combinations

The following examples relate to various non-exhaustive ways in which the teachings herein may be combined or applied. It should be understood that the following examples are not intended to restrict the coverage of any claims that may be presented at any time in this application or in subsequent filings of this application. No disclaimer is intended. The following examples are being provided for nothing more than merely illustrative purposes. It is contemplated that the various teachings herein may be arranged and applied in numerous other ways. It is also contemplated that some variations may omit certain features referred to in the below examples. Therefore, none of the aspects or features referred to below should be deemed critical unless otherwise explicitly indicated as such at a later date by the inventors or by a successor in interest to the inventors. If any claims are presented in this application or in subsequent filings related to this application that include additional features beyond those referred to below, those additional features shall not be presumed to have been added for any reason relating to patentability.

### Example 1

An apparatus for determining spatial analysis data in images of two or more proximate serial tissue sections obtained from a tissue sample, comprising: a non-transitory computer storage medium configured to store executable instructions, a first image of a first stained tissue section having one or more markers, the first image having data depicting the one or more markers of the first stained tissue section, and a second image of a second stained tissue section having one or more markers and being a proximate serial section to the first stained tissue section, the second image being registered with the first image and having data depicting the one or more markers of the second stained tissue section; one or more hardware processors in communication with the computer storage medium, wherein the executable instructions, when executed by the one or more hardware processors, configure the one or more hardware processors to determine a first measurement between a location of data depicting a first marker in the first image and a location of data depicting the second marker in the second image, wherein the first measurement represents a distance in three-dimensional (3D) space between a first object in the tissue sample associated with the first marker and a second object in the tissue sample associated with the second marker.

### Example 2

The apparatus of Example 1, wherein the executable instructions, when executed by the one or more hardware processors, further configure the one or more hardware processors to register the first image and the second image along a Z-axis such that X, Y locations of the data in the first image depicting objects in the tissue sample are aligned with X and Y locations of the data in the second image depicting corresponding objects in the tissue sample.

### Example 3

The apparatus of Example 2, wherein the executable instructions, when executed by the one or more hardware processors, further configure the one or more hardware processors to register one or more additional images to the first image.

### Example 4

The apparatus of Example 2, wherein the registration includes transforming one or both of the first and second images using a non-linear transformation.

### Example 5

The apparatus of any of Examples 1 through 4, wherein the executable instructions, when executed by the one or more hardware processors, configure the one or more hardware processors to determine a second measurement between a location of data depicting a third marker in the first image and a location of data depicting a fourth marker in the first image, wherein the first measurement represents a distance in two-dimensional (2D) space between a third object in the tissue sample associated with the third marker and a fourth object in the tissue sample associated with the fourth marker.

### Example 6

The apparatus of any of Examples 1 through 5, wherein the executable instructions, when executed by the one or more hardware processors, configure the one or more hardware processors to determine a plurality of measurements each between a location of data depicting a marker in the first image and another location of data depicting another marker in the first image, wherein each of the plurality of measurement represent a distance in two-dimensional (2D) space between two objects in the tissue sample.

### Example 7

The apparatus of any of Examples 1 through 6, wherein the executable instructions, when executed by the one or more hardware processors, configure the one or more hardware processors to determine a plurality of measurements each between a location of data depicting a marker in the first image and a location of data depicting another marker in the second image, wherein each of the plurality of measurements representing a distance in two-dimensional (2D) space between two objects in the tissue sample.

### Example 8

The apparatus of any of Examples 1 through 7, wherein the non-transitory computer storage medium is further configured to store one or more additional images of stained tissue sections that are proximate serial section of the first tissue section, and each of the one or more additional images including data depicting one or more markers, and wherein the executable instructions, when executed by the one or more hardware processors, further configure the one or more hardware processors to determine a second measurement between a location of data depicting a third marker in a third image and a location of data depicting a marker in the first image or the second image, the third image being registered with the first and second images, wherein the measurement represents a distance in a three-dimensional (3D) space between a third object in the tissue sample associated with the third marker and an object in the tissue sample associated with the marker in the first or second image.

### Example 9

The apparatus of any one of Examples 1 - 8, wherein the stained first and second stained tissue samples were stained using Hemotoxylin & Eosin (H&E).

### Example 10

The apparatus of any one of Examples 1 - 8, wherein the stained first and second slide were stained using one or more Special Stains.

### Example 11

The apparatus of any one of Examples 1 - 8, wherein the first and second stained tissue sections are processed with an immunohistochemistry (IHC) process.

### Example 12

The apparatus of Example 11, wherein the first and second stained tissue sections are processed with an in-situ hybridization technique.

### Example 13

A non-transitory computer readable medium for determining spatial analysis using two or more proximate serial tissue sections of a tissue sample, the computer readable medium having program instructions for causing a hardware processor to perform a method of: determining a first measurement between a location of data depicting a first marker in a first image and a location of data depicting a second marker in a second image, the first image being registered with the second image, wherein the first image is a digital representation of a first stained tissue section from a tissue sample, the first stained tissue section having one or more markers, and the first image having data depicting the one or more markers of the first stained tissue section, wherein the second image is a digital representation of a second stained tissue section of the tissue sample, the first and second stained tissue sections being proximate serial sections from the tissue sample, the second stained tissue section having one or more markers, and the second image having data depicting the one or more markers of the second stained tissue section, and wherein the first measurement represents a distance in three-dimensional (3D) space between a first object in the tissue sample associated with the first marker and a second object in the tissue sample associated with the second marker.

### Example 14

The non-transitory computer readable medium of Example 13, the computer readable medium having program instructions for causing a hardware processor to further perform a method of determining a second measurement between a location of data depicting a third marker in the first image and a location of data depicting a fourth marker in the second image, the first image being registered with the second image, wherein the first measurement represents a distance in three-dimensional (3D) space between a third object in the tissue sample associated with the third marker and a fourth object in the tissue sample associated with the fourth marker.

### Example 15

The non-transitory computer readable medium of Examples 13 or 14, the computer readable medium having program instructions for causing a hardware processor to further perform a method of determining a plurality of additional measurements between locations of data depicting a plurality of a first set of markers in the first image and a location of data depicting a respective plurality of a second set of markers in a second image, the first image being registered with the second image, wherein the plurality of additional measurements represent distances in three-dimensional (3D) space between objects in the tissue sample associated with the first set of markers and objects in the tissue sample associated with the second set of markers.

### Example 16

A method for determining spatial analysis information using two or more proximate serial tissue sections of a tissue sample, the method comprising: receiving a first image of a first stained tissue section of a tissue sample, the first stained tissue section having one or more markers, the first image having data depicting the one or more markers of the first stained tissue section; receiving a second image of a second stained tissue section of the tissue sample, the second stained tissue section having one or more markers and being a proximate serial section to the first stained tissue section, the second image having data depicting the one or more markers of the second stained tissue section, the second image registered with the first image; and determining a first measurement between a location of data depicting a first marker in the first image and a location of data depicting the second marker in the second image, wherein the first measurement represents a distance in three-dimensional (3D) space between a first object in the tissue sample associated with the first marker and a second object in the tissue sample associated with the second marker.

### Example 17

The method of Example 16, further comprising registering the first image and the second image along a Z-axis such that X, Y locations of the data in the first image corresponding to locations in the tissue sample are aligned with X, Y locations of the data in the second image corresponding to the locations in the tissue sample.

### Example 18

The method of Example 17, further comprising registering one or more additional images to the first image.

### Example 19

The method of Example 17, wherein the registration includes transforming one or both of the first and second images using a non-linear transformation.

### Example 20

The method of any of Examples 16 to 19, further comprising determining a second measurement between a location of data depicting a third marker in the first image and a location of data depicting a fourth marker in the first image, wherein the first measurement represents a distance in two-dimensional (2D) space between a third object in the tissue sample associated with the third marker and a fourth object in the tissue sample associated with the fourth marker.

### Example 21

The method of any of Examples 16 to 20, further comprising determining a plurality of measurements each between a location of data depicting a marker in the first image and another location of data depicting another marker in the first image, wherein each of the plurality of measurement represent a distance in two-dimensional (2D) space between two objects in the tissue sample.

### Example 22

The method of any of Example 16 to 21, further comprising determining a plurality of measurements each between a location of data depicting a marker in the first image and a location of data depicting another marker in the second image, wherein each of the plurality of measurements representing a distance in two-dimensional (2D) space between two objects in the tissue sample.

### Example 23

The method of any of Examples 16 to 22, further comprising: storing one or more additional images of stained tissue sections that are proximate serial section of the first tissue section, and each of the one or more additional images including data depicting one or more markers, and determining a second measurement between a location of data depicting a third marker in a third image and a location of data depicting a marker in the first image or the second image, the third image being registered with the first and second images, wherein the measurement represents a distance in a three-dimensional (3D) space between a third object in the tissue sample associated with the third marker and an object in the tissue sample associated with the marker in the first or second image.

### Example 24

The method of any of Examples 16 to 23, wherein the stained first and second stained tissue samples were stained using Hemotoxylin & Eosin (H&E).

### Example 25

The method of any of Examples 16 to 23, wherein the first and second stained tissue sections are processed with an immunohistochemistry (IHC) process.

### Example 26

The method of any of Examples 16 to 23, wherein the first and second stained tissue sections are processed with an in-situ hybridization technique.

### Conclusion

The foregoing description details certain embodiments of the systems, devices, and methods disclosed herein. It will be appreciated, however, that no matter how detailed the foregoing appears in text, the systems, devices, and methods can be practiced in many ways. As is also stated above, it should be noted that the use of particular terminology when describing certain features or aspects of the disclosure should not be taken to imply that the terminology is being re-defined herein to be restricted to including any specific characteristics of the features or aspects of the technology with which that terminology is associated.

It will be appreciated by those skilled in the art that various modifications and changes can be made without departing from the scope of the described technology. Such modifications and changes are intended to fall within the scope of the embodiments. It will also be appreciated by those of skill in the art that parts included in one embodiment are interchangeable with other embodiments; one or more parts from a depicted embodiment can be included with other depicted embodiments in any combination. For example, any of the various components described herein and/or depicted in the Figures can be combined, interchanged or excluded from other embodiments.

With respect to the use of substantially any plural and/or singular terms herein, those having skill in the art can translate from the plural to the singular and/or from the singular to the plural as is appropriate to the context and/or application. The various singular/plural permutations can be expressly set forth herein for sake of clarity.

Directional terms used herein (e.g., top, bottom, side, up, down, inward, outward, etc.) are generally used with reference to the orientation shown in the figures and are not intended to be limiting. For example, the top surface described above can refer to a bottom surface or a side surface. Thus, features described on the top surface may be included on a bottom surface, a side surface, or any other surface.

It will be understood by those within the art that, in general, terms used herein are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims can contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

The term "comprising" as used herein is synonymous with "including," "containing," or "characterized by," and is inclusive or open-ended and does not exclude additional, unrecited elements or method steps.

The above description discloses several methods and materials of the present invention(s). This invention(s) is susceptible to modifications in the methods and materials, as well as alterations in the fabrication methods and equipment. Such modifications will become apparent to those skilled in the art from a consideration of this disclosure or practice of the invention(s) disclosed herein. Consequently, it is not intended that this invention(s) be limited to the specific embodiments disclosed herein, but that it cover all modifications and alternatives coming within the true scope and spirit of the invention(s) as embodied in the attached claims.

## Claims

1. An apparatus for determining spatial analysis data in images of two or more proximate serial tissue sections obtained from a tissue sample, comprising:
a non-transitory computer storage medium configured to store executable instructions; and
one or more hardware processors in communication with the computer storage medium, wherein the executable instructions, when executed by the one or more hardware processors, configure the one or more hardware processors to:
receive data corresponding to a first image of a first stained tissue section having one or more markers, the first image having data depicting the one or more markers of the first stained tissue section,
receive data corresponding to a second image of a second stained tissue section having one or more markers and being a proximate serial section to the first stained tissue section, the second image being registered with the first image and having data depicting the one or more markers of the second stained tissue section, and
determine a first measurement between a location of data depicting a first marker in the first image and a location of data depicting a second marker in the second image, wherein the first measurement represents a distance in three-dimensional (3D) space between a first object in the tissue sample associated with the first marker and a second object in the tissue sample associated with the second marker.

2. The apparatus of claim 1, wherein the executable instructions, when executed by the one or more hardware processors, further configure the one or more hardware processors to register the first image and the second image along a Z-axis such that X, Y locations of the data in the first image depicting objects in the tissue sample are aligned with X and Y locations of the data in the second image depicting corresponding objects in the tissue sample.

3. The apparatus of claim 2, wherein the executable instructions, when executed by the one or more hardware processors, further configure the one or more hardware processors to register one or more additional images to the first image.

4. The apparatus of claim 2, wherein the registration includes transforming one or both of the first and second images using a non-linear transformation.

5. The apparatus of any preceding claim, wherein the executable instructions, when executed by the one or more hardware processors, configure the one or more hardware processors to determine a second measurement between a location of data depicting a third marker in the first image and a location of data depicting a fourth marker in the first image, wherein the first measurement represents a distance in two-dimensional (2D) space between a third object in the tissue sample associated with the third marker and a fourth object in the tissue sample associated with the fourth marker.

6. The apparatus of any preceding claim, wherein the executable instructions, when executed by the one or more hardware processors, configure the one or more hardware processors to determine a plurality of measurements each between a location of data depicting a marker in the first image and another location of data depicting another marker in the first image, wherein each of the plurality of measurement represent a distance in two-dimensional (2D) space between two objects in the tissue sample.

7. The apparatus of any preceding claim, wherein the executable instructions, when executed by the one or more hardware processors, configure the one or more hardware processors to determine a plurality of measurements each between a location of data depicting a marker in the first image and a location of data depicting another marker in the second image, wherein each of the plurality of measurements representing a distance in two-dimensional (2D) space between two objects in the tissue sample.

8. The apparatus any preceding claim,
wherein the executable instructions, when executed by the one or more hardware processors, further configure the one or more hardware processors to:
receive data corresponding to one or more additional images of stained tissue sections that are proximate serial section of the first tissue section, and each of the one or more additional images including data depicting one or more markers, and
determine a second measurement between a location of data depicting a third marker in a third image and a location of data depicting a marker in the first image or the second image, the third image being registered with the first and second images, wherein the measurement represents a distance in a three-dimensional (3D) space between a third object in the tissue sample associated with the third marker and an object in the tissue sample associated with the marker in the first or second image.

9. The apparatus of any preceding claim, wherein the executable instructions, when executed by the one or more hardware processors, configure the one or more hardware processors to store the first measurement to the non-transitory computer storage medium for subsequent spatial analysis.

10. A method for determining spatial analysis information using two or more proximate serial tissue sections of a tissue sample, the method being performed by a computing system, the method comprising:
receiving a first image of a first stained tissue section of a tissue sample, the first stained tissue section having one or more markers, the first image having data depicting the one or more markers of the first stained tissue section;
receiving a second image of a second stained tissue section of the tissue sample, the second stained tissue section having one or more markers and being a proximate serial section to the first stained tissue section, the second image having data depicting the one or more markers of the second stained tissue section, the second image registered with the first image; and
determining a first measurement between a location of data depicting a first marker in the first image and a location of data depicting the second marker in the second image, wherein the first measurement represents a distance in three-dimensional (3D) space between a first object in the tissue sample associated with the first marker and a second object in the tissue sample associated with the second marker.

11. The method of claim 10, further comprising registering the first image and the second image along a Z-axis such that X, Y locations of the data in the first image corresponding to locations in the tissue sample are aligned with X, Y locations of the data in the second image corresponding to the locations in the tissue sample.

12. The method of claim 11, further comprising registering one or more additional images to the first image.

13. The method of claim 11, wherein the registration includes transforming one or both of the first and second images using a non-linear transformation.

14. The method of any of claims 10 to 13, further comprising determining a second measurement between a location of data depicting a third marker in the first image and a location of data depicting a fourth marker in the first image, wherein the first measurement represents a distance in two-dimensional (2D) space between a third object in the tissue sample associated with the third marker and a fourth object in the tissue sample associated with the fourth marker.

15. The method of any of claims 10 to 14, further comprising determining a plurality of measurements each between a location of data depicting a marker in the first image and another location of data depicting another marker in the first image, wherein each of the plurality of measurement represent a distance in two-dimensional (2D) space between two objects in the tissue sample.

16. The method of any of claims 10 to 15, further comprising determining a plurality of measurements each between a location of data depicting a marker in the first image and a location of data depicting another marker in the second image, wherein each of the plurality of measurements representing a distance in two-dimensional (2D) space between two objects in the tissue sample.

17. The method of any of claims 10 to 16, further comprising:
storing one or more additional images of stained tissue sections that are proximate serial section of the first tissue section, and each of the one or more additional images including data depicting one or more markers, and
determining a second measurement between a location of data depicting a third marker in a third image and a location of data depicting a marker in the first image or the second image, the third image being registered with the first and second images, wherein the measurement represents a distance in a three-dimensional (3D) space between a third object in the tissue sample associated with the third marker and an object in the tissue sample associated with the marker in the first or second image.
